# EUROPÄISCHE PATENTSCHRIFT

(11) **EP 3 519 847 B1**
(45) Veröffentlichungstag und Bekanntmachung des Hinweises auf die Patenterteilung: **11.11.2020**
(21) Anmeldenummer: 17777255.5
(22) Anmeldetag: 29.09.2017
(51) Int. Cl.: G01S 7/481, G01S 17/93

(54) **ERFASSUNGSVORRICHTUNG FÜR EIN KRAFTFAHRZEUG, ANBAUTEIL SOWIE KRAFTFAHRZEUG**
DETECTION DEVICE FOR A MOTOR VEHICLE, ATTACHMENT PART, AND MOTOR VEHICLE
DISPOSITIF DE DÉTECTION POUR UN VÉHICULE AUTOMOBILE, PIÈCE RAPPORTÉE AINSI QUE VÉHICULE AUTOMOBILE

(30) Priorität: 29.09.2016 DE 102016118471
(43) Veröffentlichungstag der Anmeldung: 07.08.2019
(73) Patentinhaber: Valeo Schalter und Sensoren GmbH, 74321 Bietigheim-Bissingen (DE)
(72) Erfinder: LIN, Lin, 74321 Bietigheim-Bissingen (DE); HORVATH, Peter, 74321 Bietigheim-Bissingen (DE); SCHULER, Thomas, 74321 Bietigheim-Bissingen (DE)
(74) Vertreter: Withopf, Kristina
(86) Internationale Anmeldenummer: PCT/EP2017/074746
(87) Internationale Veröffentlichungsnummer: WO 2018/060407

(56) Entgegenhaltungen:
- EP-A2- 0 441 555
- DE-C1- 4 040 894
- DE-U1- 9 103 492

## Beschreibung

Die Erfindung betrifft eine optische Erfassungsvorrichtung für ein Kraftfahrzeug zum Anordnen an einem Anbauteil des Kraftfahrzeugs und zum Überwachen eines an das Anbauteil angrenzenden Bereiches, mit einer Sendeeinrichtung aufweisend eine Licht emittierende Lichtquelle und mit einer Empfangseinrichtung aufweisend einen lichtempfindlichen Sensor, wobei die Sendeeinrichtung dazu ausgelegt ist, Lichtstrahlen entlang vorbestimmter Abtastrichtungen in den Bereich auszusenden, und die Empfangseinrichtung dazu ausgelegt ist, in dem Bereich reflektierte Teile der Lichtstrahlen zu empfangen. Die Erfindung betrifft außerdem ein Anbauteil mit zumindest einer optischen Erfassungsvorrichtung sowie ein Kraftfahrzeug mit zumindest einem Anbauteil.

Im vorliegenden Fall richtet sich das Interesse auf optische Erfassungsvorrichtungen für Kraftfahrzeuge, insbesondere Lidar-Systeme (Lidar- "Light Detection and Ranging"). Mittels solcher Lidar-Systeme kann beispielsweise ein Umgebungsbereich des Kraftfahrzeugs überwacht werden. Dabei können Objekte in dem Umgebungsbereich erfasst werden und Informationen über die erfassten Objekte, beispielsweise eine relative Lage der Objekte zu dem Kraftfahrzeug, einem Fahrerassistenzsystem des Kraftfahrzeugs bereitgestellt werden. Das Fahrerassistenzsystem kann basierend auf diesen Informationen Maßnahmen zur Vermeidung einer Kollision des Kraftfahrzeugs mit den Objekten einleiten, beispielsweise das Kraftfahrzeug vor der Kollision automatisch abbremsen, und/oder das Kraftfahrzeug zumindest semi-autonom einparken.

Bei Lidar-Systemen, beispielsweise Laserscannern, gemäß dem Stand der Technik wird üblicherweise ein Lichtstrahl, beispielsweise ein Laserstrahl, entlang einer Abtastrichtung in den Umgebungsbereich ausgesendet und der Umgebungsbereich durch Verändern eines Abtastwinkels beziehungsweise der Abtastrichtung abgetastet beziehungsweise abgescannt. Sobald der Lichtstrahl auf ein Objekt in dem Umgebungsbereich trifft, wird zumindest ein Teil des Lichtstrahls an dem Objekt zurück zu dem Laserscanner reflektiert. Eine Empfangseinrichtung des Laserscanners empfängt den reflektierten Teil des Lichtstrahls und bestimmt anhand einer Laufzeit des Lichtes beziehungsweise einer Zeitdauer zwischen dem Aussenden des Lichtstrahls und dem Empfangen des reflektierten Teils des Lichtstrahls einen Abstand des Objekts bezüglich des Kraftfahrzeugs. Unter Kenntnis des Abtastwinkels beim Aussenden des Lichtstrahls kann außerdem eine Orientierung beziehungsweise eine Richtung des Objektes zu dem Kraftfahrzeug bestimmt werden. Aus der Orientierung sowie dem Abstand kann dann die relative Lage des Objekts zu dem Kraftfahrzeug bestimmt werden.

Zum Verändern des Abtastwinkels wird der Lichtstrahl, wie beispielsweise in der DE 19927501 A1 beschrieben, rotierend in den Umgebungsbereich abgestrahlt. Dazu kann der Lichtstrahl von der Lichtquelle beispielsweise auf einen Drehspiegel des Laserscanners ausgesendet werden, welcher den Lichtstrahl entlang der unterschiedlichen Abtastrichtungen reflektiert, wobei die jeweiligen Abtastrichtungen über einen Schwenkwinkel beziehungsweise eine Orientierung des Drehspiegels eingestellt werden.

In der EP 0 441 555 A2 wird ein System zur Verwendung in einem Automobil zum Erfassen von Objekten offenbart.

In der DE 40 40 894 C1 wird eine Einparkhilfe mit entlang der Außenkontur eines Fahrzeugs und parallel zur Fahrbahnoberfläche befestigten Lasersensoren offenbart.

In der De 91 03 492 U1 wird eine elastische Schiene mit einer ersten freien Oberfläche und einer Rückseite zur Montage an einer Stoßstange oder unmittelbar auf der Karosserie eines Fahrzeugs offenbart.

Eine solche optische Erfassungsvorrichtung gemäß dem Stand der Technik ist üblicherweise sperrig und nicht flexibel formbar, da die Komponenten der optischen Erfassungsvorrichtung in der Regel in einem kastenförmigen Gehäuse angeordnet sind. Dadurch ergeben sich Einschränkungen hinsichtlich des Anbauortes der optischen Erfassungsvorrichtung am Kraftfahrzeug. Somit kann ein Design des Kraftfahrzeugs, insbesondere eines Anbauteils, an welchem die optische Erfassungsvorrichtung gemäß dem Stand der Technik angeordnet wird, nicht beliebig gewählt werden, da ein Platzbedarf der sperrigen Erfassungsvorrichtung berücksichtigt werden muss.

Es ist Aufgabe der vorliegenden Erfindung, eine optische Erfassungsvorrichtung für ein Kraftfahrzeug besonders flexibel und zuverlässig zu gestalten, sodass insbesondere ein Anbauort für die Erfassungsvorrichtung am Kraftfahrzeug frei wählbar ist.

Diese Aufgabe wird erfindungsgemäß durch eine optische Erfassungsvorrichtung, ein Anbauteil sowie ein Kraftfahrzeug gemäß den jeweiligen unabhängigen Patentansprüchen gelöst. Vorteilhafte Ausführungsformen der Erfindung sind Gegenstand der abhängigen Patentansprüche, der Beschreibung sowie der Figuren.

Gemäß einer Ausführungsform einer optischen Erfassungsvorrichtung für ein Kraftfahrzeug zum Anordnen an einem Anbauteil des Kraftfahrzeugs und zum Überwachen eines an das Anbauteil angrenzenden Bereiches umfasst diese eine Sendeeinrichtung aufweisend eine Licht emittierende Lichtquelle und eine Empfangseinrichtung aufweisend einen lichtempfindlichen Sensor, wobei die Sendeeinrichtung dazu ausgelegt ist, Lichtstrahlen entlang vorbestimmter Abtastrichtungen in den Bereich auszusenden, und die Empfangseinrichtung dazu ausgelegt ist, in dem Bereich reflektierte Teile der Lichtstrahlen zu empfangen. Insbesondere umfasst die Sendeeinrichtung eine erste Lichtführungseinrichtung zum Führen des von der Lichtquelle emittierten Lichts entlang einer Oberfläche des Anbauteils und zumindest zwei, zu jeweiligen Abtastrichtungen korrespondierende Auskoppelelemente zum Auskoppeln von Teilen des geführten Lichtes als die entlang der jeweiligen Abtastrichtung orientierten Lichtstrahlen. Insbesondere umfasst die Empfangseinrichtung zumindest zwei, zu jeweiligen Abtastrichtungen korrespondierende Einkoppelelemente zum Einkoppeln der entlang der jeweiligen Abtastrichtung aus dem Bereich reflektierten Teile der Lichtstrahlen und eine zweite Lichtführungseinrichtung zum Führen der eingekoppelten Teile der Lichtstrahlen zu dem lichtempfindlichen Sensor.

Bevorzugt umfasst eine optische Erfassungsvorrichtung für ein Kraftfahrzeug zum Anordnen an einem Anbauteil des Kraftfahrzeugs und zum Überwachen eines an das Anbauteil angrenzenden Bereiches eine Sendeeinrichtung aufweisend eine Licht emittierende Lichtquelle und eine Empfangseinrichtung aufweisend einen lichtempfindlichen Sensor, wobei die Sendeeinrichtung dazu ausgelegt ist, Lichtstrahlen entlang vorbestimmter Abtastrichtungen in den Bereich auszusenden, und die Empfangseinrichtung dazu ausgelegt ist, in dem Bereich reflektierte Teile der Lichtstrahlen zu empfangen. Darüber hinaus umfasst die Sendeeinrichtung eine erste Lichtführungseinrichtung zum Führen des von der Lichtquelle emittierten Lichts entlang einer Oberfläche des Anbauteils und zumindest zwei zu jeweiligen Abtastrichtungen korrespondierende Auskoppelelemente zum Auskoppeln von Teilen des geführten Lichtes als die entlang der jeweiligen Abtastrichtung orientierten Lichtstrahlen. Ferner umfasst die Empfangseinrichtung zumindest zwei zu jeweiligen Abtastrichtungen korrespondierende Einkoppelelemente zum Einkoppeln der entlang der jeweiligen Abtastrichtung aus dem Bereich reflektierten Teile der Lichtstrahlen und eine zweite Lichtführungseinrichtung zum Führen der eingekoppelten Teile der Lichtstrahlen zu dem lichtempfindlichen Sensor.

Die optische Erfassungsvorrichtung, welche insbesondere als ein Lidar-System ausgebildet ist, kann an dem Anbauteil des Kraftfahrzeugs angeordnet werden und den an das Anbauteil angrenzenden Bereich überwachen. Das Anbauteil kann beispielsweise ein Außenverkleidungsteil des Kraftfahrzeugs, insbesondere ein Stoßfänger des Kraftfahrzeugs, sein, sodass die optische Erfassungsvorrichtung als den Bereich einen Umgebungsbereich außerhalb des Kraftfahrzeugs überwachen kann. Die optische Erfassungsvorrichtung kann beispielsweise Objekte in dem Umgebungsbereich detektieren. Solche Objekte können beispielsweise Hindernisse, Bordsteine, Fußgänger, etc. sein. Auch kann das Anbauteil beispielsweise eine Innenraumkomponente des Kraftfahrzeugs sein, sodass die optische Erfassungsvorrichtung als den Bereich einen Innenraum beziehungsweise eine Fahrgastzelle des Kraftfahrzeugs überwacht. Eine solche Innenraumkomponente kann beispielsweise ein Innenverkleidungsteil eines Armaturenbretts und/oder einer Mittelkonsole, ein Lenkrad, ein Dachhimmel, etc. sein. Als das Objekt kann beispielsweise eine Hand eines Fahrers des Kraftfahrzeugs erfasst werden, sodass Gesten des Fahrers zum Bedienen von fahrzeugseitigen Einrichtungen, beispielsweise Infotainmentkomponenten, erkannt werden können.

Die optische Erfassungsvorrichtung weist die Sendeeinrichtung auf, welche die Lichtquelle zum Aussenden des Lichts, insbesondere Laserlichts, umfasst. Das von der Lichtquelle ausgesendete Licht, welche beispielsweise zumindest ein Sendelement in Form von einer Laserdiode oder einer LED aufweist, wird der ersten Lichtführungseinrichtung zugeführt, welche an der Oberfläche des Anbauteils anordenbar ist. Insbesondere ist die erste Lichtführungseinrichtung an einer dem Bereich abgewandten Oberfläche des Anbauteils, beispielsweise an einer Rückseite des Stoßfängers oder der Innenraumkomponente, anordenbar. Dabei kann das Anbauteil Durchgangsöffnungen aufweisen, über welche das Licht von der Rückseite zu einer dem Bereich zugewandten Vorderseite durchtreten kann. Die erste Lichtführungseinrichtung ist dazu ausgelegt, Licht entlang einer Lichtführungsrichtung beziehungsweise Lichtausbreitungsrichtung, entlang welcher sich die erste Lichtführungseinrichtung erstreckt, zu führen. Die Lichtführungsrichtung entspricht also einer Erstreckungsrichtung der ersten Lichtführungseinrichtung.

Im eingebauten Zustand der optischen Erfassungsvorrichtung am Anbauteil verläuft die Lichtführungsrichtung dabei entlang, insbesondere parallel, zu der Oberfläche beziehungsweise einer Kontur des Anbauteils. Die erste Lichtführungseinrichtung ist also dazu ausgelegt, das Licht entlang der Kontur des Anbauteils zu führen. Die Kontur kann dabei bereichsweise gewölbt sein, sodass die Lichtausbreitungsrichtung entlang welcher das Licht durch die erste Lichtführungseinrichtung geführt wird, im Wesentlichen parallel zu der Oberfläche orientiert ist. Beispielsweise kann das Licht entlang einer Längenrichtung des Anbauteils geführt werden. So kann die Lichtquelle beispielsweise an einem Ende des Stoßfängers angeordnet sein und das Licht über eine Länge des Stoßfängers geführt werden. Die erste Lichtführungseinrichtung ist also flexibel an den Oberflächenverlauf des Anbauteils anpassbar. Anders ausgedrückt ist die erste Lichtführungseinrichtung insbesondere entlang der Längenrichtung des Anbauteils beziehungsweise der Erstreckungsrichtung der ersten Lichtführungseinrichtung frei formbar.

Zum Erzeugen der entlang der Abtastrichtungen beziehungsweise Abtastwinkel orientierten Lichtstrahlen werden Teile des in der ersten Lichtführungseinrichtung geführten Lichts mittels der Auskoppelelemente abgezweigt und als Lichtstrahlen in den Umgebungsbereich ausgesendet. Die Abtastrichtungen sind dabei im Wesentlichen senkrecht zu der Lichtausbreitungsrichtung beziehungsweise senkrecht zu der Oberfläche des Anbauteils orientiert. Dazu sind die Auskoppelelemente ausgehend von der Lichtquelle insbesondere in regelmäßigen Abständen entlang der Lichtausbreitungsrichtung angeordnet, sodass in regelmäßigen Abständen Lichtstrahlen in den Umgebungsbereich orientiert werden. Durch die entlang der unterschiedlichen Abtastrichtungen, insbesondere Abtastrichtungsbereiche, orientierten Lichtstrahlen wird dabei ein Winkelbereich in dem an das Anbauteil angrenzenden Bereich ausgeleuchtet, welcher einem Sichtfeld beziehungsweise einem Erfassungsbereich der Sendeeinrichtung entspricht. Im Falle einer an einem Stoßfänger angeordneten Erfassungsvorrichtung erstreckt sich das Sichtfeld entlang des Stoßfängers und weitet sich insbesondere ausgehend vom Stoßfänger in dem Bereich auf.

Außerdem weist die optische Erfassungsvorrichtung die Empfangseinrichtung auf, welche den lichtempfindlichen Sensor umfasst. Der Sensor kann beispielsweise eine Matrixanordnung von lichtempfindlichen Sensorelementen beziehungsweise Pixeln, beispielsweise Fotodioden, aufweisen. Diesem Sensor wird das in dem Bereich, beispielsweise an einem Objekt, reflektierte Licht mittels der zweiten Lichtführungseinrichtung zugeführt, sodass der Sensor anhand einer Laufzeit des Lichtes einen Abstand des Objektes zu dem Anbauteil erfassen kann. Die zweite Lichtführungseinrichtung ist ebenfalls flexibel formbar ausgestaltet, sodass diese beispielsweise ebenfalls an der Oberfläche des Anbauteils angeordnet werden kann und den reflektierten Teil des Lichtes entlang der Oberfläche des Anbauteils zu dem Sensor führen kann. Zum Einkoppeln des reflektierten Lichtes in die zweite Lichtführungseinrichtung weist die Empfangseinrichtung die Einkoppelelemente auf, wobei jedes Einkoppelelement Licht aus einer bestimmten Abtastrichtung, insbesondere einem bestimmten Abtastrichtungsbereich, einsammeln und der zweiten Lichtführungseinrichtung zuführen kann. Ein Winkelbereich, aus welchem die Einkoppelelemente die reflektierten Teile in die zweite Lichtführungseinrichtung einkoppeln, entspricht einem Sichtfeld der Empfangseinrichtung.

Durch die Lichtführungseinrichtungen, welche derart formbar sind, dass sie an den Oberflächenverlauf des Anbauteils angepasst werden können, kann die optische Erfassungsvorrichtung flexibel am Kraftfahrzeug angeordnet werden. Insbesondere kann die optische Erfassungseinrichtung auch an Einbauorten mit einem geringen Platzangebot angeordnet werden, beispielsweise in den Stoßfänger oder das Armaturenbrett integriert werden. Die optische Erfassungsvorrichtung ist daher besonders platzsparend ausgebildet, wodurch ein Erscheinungsbild beziehungsweise Design des Kraftfahrzeugs unabhängig von der optischen Erfassungsvorrichtung ausgebildet werden kann.

Vorzugsweise sind die Lichtquelle und der lichtempfindliche Sensor auf einem gemeinsamen Träger angeordnet, wobei die erste Lichtführungseinrichtung dazu ausgelegt ist, das von der Lichtquelle emittierte Licht ausgehend von dem Träger entlang der Oberfläche des Anbauteils zu führen und die zweite Lichtführungseinrichtung dazu ausgelegt ist, die reflektieren Teile der Lichtstrahlen entlang der Oberfläche zu dem Träger zurückzuführen. Wenn die Lichtquelle und der Sensor auf einem gemeinsamen Träger, beispielsweise einer Leiterplatte beziehungsweise Platine, angeordnet sind, können die Lichtquelle und der Sensor besonders einfach und unaufwendig, beispielsweise zur Energieversorgung, kontaktiert werden. Durch die flexiblen Lichtführungseinrichtungen kann das von der Lichtquelle emittierte Licht in Längenrichtung des Anbauteils von dem Träger weggeführt werden und dabei Teile des Lichtes mittels der Auskoppelelemente in den Bereich abgestrahlt werden. Die reflektierten Teile der Lichtstrahlen werden mittels der Einkoppelelemente wieder eingekoppelt und entgegen der Längenrichtung zu dem Träger zurückgeführt.

Besonders bevorzugt weist die zweite Lichtführungseinrichtung mit den Abtastrichtungen korrespondierende Lichtwellenleiter auf, wobei jeder Lichtwellenleiter mit einem Einkoppelelement optisch gekoppelt ist und dazu ausgelegt ist, den jeweiligen entlang der Abtastrichtung aus dem Bereich reflektierten Teil der Lichtstrahlen zu dem lichtempfindlichen Sensor zu leiten. Insbesondere ist jeder Lichtwellenleiter mit jeweils einem Sensorbereich aufweisend zumindest ein Sensorelement des lichtempfindlichen Sensors optisch gekoppelt. Dabei ist der jeweilige Sensorbereich dazu ausgelegt, anhand einer Laufzeit des ausgesendeten Lichtstrahls und des an einem Objekt reflektierten Teils des Lichtstrahls einen Abstand des Objektes zu dem Anbauteil sowie anhand des zugeordneten Lichtwellenleiters die jeweilige Abtastrichtung zu bestimmen. Bei der Bestimmung des Abstandes des Objektes wird dabei in vorteilhafter Weise von dem Sensor eine eine Zeitverzögerung verursachende Laufzeit des Lichtes in den Lichtführungseinrichtungen berücksichtigt. Die Laufzeit des Lichtes kann anhand einer Länge des Anbauteils sowie einer, von einem Material der Lichtführungseinrichtungen abhängigen Ausbreitungsgeschwindigkeit des Lichts in den Lichtführungseinrichtungen bestimmt werden.

Lichtwellenleiter beziehungsweise Lichtleitkabel sind länglich geformte optische Elemente, welche Licht in ihrem Inneren durch Totalreflexion leiten können. Solche Lichtwellenleiter sind besonders flexibel, da sie zerstörungsfrei biegbar sind und damit auch an gewölbten Konturen beziehungsweise Oberflächen angeordnet werden können. Jeder Lichtwellenleiter ist somit frei formbar. Insbesondere sind die Lichtwellenleiter aus PMMA (Polymethymethacrylat) ausgebildet, welches Licht besonders gut transmittiert, witterungs- und alterungsbeständig sowie sehr gut verformbar ist. Jedes Einkoppelelement und der zugehörige, mit dem Einkoppelelement optische gekoppelte Freiformlichtwellenleiter bilden einen Empfangskanal aus, wobei jeder Empfangskanal mit einer Abtastrichtung, insbesondere einem Abtastrichtungsbereich, korrespondiert. Dies bedeutet, dass jeder Empfangskanal insbesondere nur das aus der zugehörigen Abtastrichtung reflektierte Licht empfängt. Jeder Empfangskanal ist dabei mit zumindest einem Sensorelement beziehungsweise Pixel des Sensors optisch gekoppelt. Sobald das Licht entlang einer bestimmten Abtastrichtung aus dem Bereich zu der optischen Erfassungsvorrichtung zurückreflektiert wird, wird es über den entsprechenden Empfangskanal eingekoppelt und dem mit dem Empfangskanal optisch gekoppelten Sensorbereich zugeführt. Sobald ein Sensorbereich Licht erfasst, kann dieser anhand des zugehörigen Empfangskanals die Abtastrichtung bestimmen, sowie anhand der Laufzeit des Lichts den Abstand des Objektes bestimmen. Die Empfangseinrichtung der optischen Erfassungsvorrichtung ist somit auf besonders einfache Weise mittels der Lichtwellenleiter winkelauflösend ausgebildet.

Erfindungsgemäß weist die erste Lichtführungseinrichtung einen Lichtwellenleiter zum Leiten des Lichts entlang der Oberfläche des Anbauteils auf, wobei der Lichtwellenleiter zum Ausbilden der Auskoppelelemente zumindest zwei mit jeweiligen Abtastrichtungen korrespondierende Reflexionselemente aufweist, welche dazu ausgelegt sind, einen jeweiligen Teil des in dem Lichtwellenleiter geleiteten Lichtes entlang der jeweiligen Abtastrichtung in den Bereich zu reflektieren. Die erste Lichtführungseinrichtung kann also ebenfalls als ein Lichtwellenleiter ausgebildet sein, welcher beispielsweise aus PMMA gefertigt ist, frei formbar ist und an der Oberfläche des Anbauteils anordenbar ist. Der Lichtwellenleiter leitet das von der Lichtquelle emittierte und in den Lichtwellenleiter eingekoppelte Licht parallel der Oberfläche des Anbauteils. Dazu kann der Lichtwellenleiter beispielsweise eine Länge aufweisen, welche in etwa der Länge des Anbauteils entspricht. Das Licht wird beispielsweise an einer Einkoppelfläche an einem Ende des Lichtwellenleiters eingekoppelt und in Lichtausbreitungsrichtung durch Totalreflexion entlang der Länge des Lichtwellenleiters geleitet. Zum Auskoppeln von Teilen des Lichtes als Lichtstrahlen wird die Totalreflexion unterbrochen. Dazu weist der Lichtwellenleiter entlang der Länge des Lichtwellenleiters beabstandet zueinander die Reflexionselemente auf, sodass ein erster Teil des Lichtes nach der Reflexion an dem Reflexionselement innerhalb des Lichtwellenleiters weitergeleitet wird und ein zweiter Teil des Lichtes als Lichtstrahl aus dem Lichtwellenleiter in den Bereich austritt. Mittels der Reflexionselemente werden also die Lichtstrahlen geformt und entlang der jeweiligen, zu den Reflexionselementen gehörigen Abtastrichtungen in den Bereich orientiert.

Es erweist sich als vorteilhaft, wenn die Reflexionselemente ausgehend von der Lichtquelle beabstandet zueinander angeordnet sind, wobei eine Reflektivität der jeweiligen Reflexionselemente in Abhängigkeit von einem Abstand der jeweiligen Reflexionselemente zu der Lichtquelle vorbestimmt ist. Mit anderen Worten bedeutet dies, dass die Reflexionselemente unterschiedliche Reflektivitäten beziehungsweise Reflexionsgrade aufweisen. Dadurch wird eine optische Dichte der ersten Lichtführungseinrichtung in Längenrichtung variiert beziehungsweise verändert. Insbesondere steigt der Reflexionsgrad der Reflexionselemente mit steigendem Abstand zu der Lichtquelle. Der Anteil des an einem Reflexionselement reflektierten Lichts, welcher als Lichtstrahl in den Bereich austritt wird, vergrößert sich also mit steigendem Abstand zu der Lichtquelle. Der Erfindung liegt die Erkenntnis zugrunde, dass durch das Auskoppeln der Lichtstrahlen in den Bereich mit steigendem Abstand zu der Lichtquelle eine Lichtmenge beziehungsweise Intensität des in dem Lichtwellenleiter weitergeführten Lichts sinkt. Durch das Anpassen des Reflexionsgrades an den Abstand der Reflexionselemente zu der Lichtquelle kann gewährleistet werden, dass eine Lichtmenge des Lichtes, welche als Lichtstrahl in den Bereich ausgekoppelt wird, auch mit steigendem Abstand zu der Lichtquelle konstant bleibt und somit das Sichtfeld über die gesamte Länge homogen beziehungsweise gleichmäßig ausgeleuchtet wird.

Dabei ist vorgesehen, dass die erste Lichtführungseinrichtung eine sich entlang einer Länge des Lichtwellenleiters erstreckende, den Lichtwellenleiter bereichsweise umgebende Schicht mit einer reflektierenden Struktur aufweist, wobei die Reflexionselemente als Strukturbereiche der reflektierenden Struktur ausgebildet sind und dazu ausgelegt sind, Teile des in dem Lichtwellenleiter geführten Lichts als die Lichtstrahlen in den an das Anbauteil angrenzenden Bereich zu reflektieren. Insbesondere ist die reflektierende Struktur sägezahnförmig ausgebildet. Die reflektierende Schicht bildet also einen ersten Mantelteilbereich für den Lichtwellenleiter aus, welcher einen das Licht leitenden Kern des Lichtwellenleiters bereichsweise umgibt. Die reflektierende Schicht kann beispielsweise an einer der Oberfläche des Anbauteils abgewandten Seite des Lichtwellenleiters angeordnet sein und somit der Oberfläche des Anbauteils gegenüberliegen. Ein zweiter Mantelteilbereich des Lichtwellenleiters ohne die reflektierende Struktur, welcher beispielsweise an einer der Oberfläche des Anbauteils zugewandten Seite des Lichtwellenleiters und damit der reflektierenden Struktur gegenüberliegend angeordnet ist, bildet dabei eine Austrittsfläche für das von den Strukturbereichen reflektierte Licht in den Bereich aus. Der zweite Mantelteilbereich ohne die reflektierende Struktur kann beispielsweise eine für den Lichtstrahl transmissive Struktur aufweisen, durch welche die Totalreflexion ebenfalls unterbrochen werden kann. Eine Charakteristik des austretenden Lichtstrahls, also beispielsweise die jeweiligen Abtastrichtungen sowie eine Intensität des Lichtstrahls, kann durch die reflektierende Struktur beeinflusst werden. Beispielsweise kann durch einen Winkel, eine Tiefe, eine Größe und eine Kantenschärfe der sägezahnförmigen Struktur die Charakteristik beeinflusst werden.

In einer Weiterbildung der ersten Ausführungsform der Erfindung weist die Empfangseinrichtung zum Ausbilden der Einkoppelelemente zu den Abtastrichtungen korrespondierende Linsenelemente auf, welche dazu ausgelegt sind, die aus dem Bereich entlang der Abtastrichtung reflektierten Teile der Lichtstrahlen in die zweite Lichtführungseinrichtung einzukoppeln. Die Linsenelemente beziehungsweise Kollimatoren können als Mikrolinsen ausgebildet sein und in einem optischen Pfad zwischen dem Bereich und der zweiten Lichtführungseinrichtung angeordnet werden. Dabei kann beispielsweise jeder Lichtwellenleiter der zweiten Lichtführungseinrichtung mit einem Linsenelement optisch gekoppelt sein, welches das in dem Bereich zu der optischen Erfassungsvorrichtung reflektierte Licht in den zugehörigen Lichtwellenleiter fokussieren kann. Beispielsweise können die Linsenelemente über Durchgangsöffnungen des Anbauteils angeordnet sein, durch welche das Licht von dem an die Vorderseite des Anbauteils angrenzenden Bereich zu den an der Rückseite angeordneten Lichtwellenleitern geführt werden kann. Insbesondere können die Linsenelemente zumindest bereichsweise in dem Anbauteil versenkt werden, sodass die Vorderseite des Anbauteils und eine Vorderseite der Linsenelemente im Wesentlichen bündig abschließend ausgebildet sind. Durch das Linsenelement kann der aus einem Abtastrichtungsbereich mit der jeweiligen Abtastrichtung reflektierte Teil des Lichtstrahls eingesammelt werden und somit ein Sichtfeld der einzelnen Empfangskanäle vergrößert werden. Somit kann auch das Sichtfeld der gesamten Empfangseinrichtung aufgeweitet beziehungsweise vergrößert werden.

Dabei erweist es sich als vorteilhaft, wenn die Sendeeinrichtung ebenfalls Linsenelemente beziehungsweise Kollimatoren aufweist, wobei jedes Linsenelement einem Reflexionselement zugeordnet und mit diesem optisch gekoppelt ist und in einem optischen Pfad zwischen dem Reflexionselement und dem Bereich des Anbauteils angeordnet ist. Gemäß der ersten Ausführungsform der Erfindung weist also die Sendeeinrichtung eine senderseitige Kollimatoroptik und die Empfangseinrichtung eine empfängerseitige Kollimatorptik auf. Durch die Linsenelemente wird der von den Reflexionselementen geformte Lichtstrahl beim Austreten in den Bereich aufgeweitet und dadurch ein Sichtfeld der Sendeeinrichtung vergrößert. Eine Divergenz des von der Sendeeinrichtung ausgesendeten Lichtes wird also an das Sichtfeld der Empfangskanäle angepasst. Somit kann verhindert werden, dass tote Winkel beziehungsweise nicht ausgeleuchtete Teilbereiche in dem Bereich entstehen.

Gemäß einer zweiten Ausführungsform der Erfindung weist die erste Lichtführungseinrichtung zumindest zwei, zu den Abtastrichtungen korrespondierende Strahlteiler auf, welche dazu ausgelegt sind, das von der Lichtquelle emittierte Licht entlang der Oberfläche des Anbauteils durch Transmission zu führen, und welche dazu ausgelegt sind, zum Ausbilden der Auskoppelelemente Teile des Lichts als die Lichtstrahlen entlang der jeweiligen Abtastrichtung in den Bereich zu reflektieren und zum Ausbilden der Einkoppelelemente die entlang der jeweiligen Abtastrichtung reflektierten Teile der Lichtstrahlen zu transmittieren und der zweiten Lichtführungseinrichtung zuzuführen. Gemäß dieser Ausführungsform bilden die Strahlteiler also insbesondere sowohl die erste Lichtführungseinrichtung als auch die Auskoppelelemente und die Einkoppelelemente aus. Die Strahlteiler werden dabei ausgehend von der Lichtquelle mit steigendem Abstand zu der Lichtquelle entlang der Oberfläche des Anbauteils angeordnet. Dabei transmittiert jeder Strahlteiler in Lichtführungsrichtung einen Teil des Lichtes der Lichtquelle zu dem nächsten Strahlteiler. Außerdem reflektiert jeder Strahlteiler einen Teil des Lichtes in den Bereich entlang der jeweiligen, dem Strahlteiler zugeordneten Abtastrichtung, also insbesondere senkrecht zu der Lichtführungsrichtung. Das in dem Bereich reflektierte Licht trifft wiederum zurück auf die Strahlteiler, welche gleichzeitig die Einkoppelelemente ausbilden und das Licht in Richtung der zweiten Lichtführungseinrichtung transmittieren. Dabei kann jeder Strahlteiler mit einem Lichtwellenleiter der zweiten Lichtführungseinrichtung optisch gekoppelt sein, sodass der aus dem Bereich reflektierte Lichtstrahl dem entsprechenden Sensorbereich zugeführt werden kann. Hier bildet also jeder Strahlteiler mit dem zugehörigen Lichtwellenleiter einen Empfangskanal aus. Mittels der Strahlteiler, welche separat voneinander an der Oberfläche des Anbauteils angeordnet werden können, kann also mit wenigen Bauelementen eine frei formbare, flexible anordenbare und zuverlässige optische Erfassungsvorrichtung bereitgestellt werden.

Es erweist sich als vorteilhaft, wenn die Strahlteiler ausgehend von der Lichtquelle beabstandet zueinander angeordnet sind, wobei eine Transmissivität der jeweiligen Strahlteiler in Abhängigkeit von einem Abstand der jeweiligen Strahlteiler zu der Lichtquelle bestimmt ist. Mit anderen Worten bedeutet dies, dass die Strahlteiler unterschiedliche Transmissivitäten beziehungsweise Transmissionsgrade aufweisen. Insbesondere sinkt der Transmissionsgrad der Strahlteiler mit steigendem Abstand von der Lichtquelle. Der Anteil des von einem Strahlteiler in den Bereich reflektierten Lichts zu dem transmittierten Licht vergrößert sich also mit steigendem Abstand zu der Lichtquelle. Dadurch wird wiederum eine konstante Lichtmenge, welche als Lichtstrahl ausgekoppelt wird, über eine gesamte Länge der ersten Lichtführungseinrichtung und damit insbesondere über die gesamte Länge des Anbauteils erreicht. Durch das Anpassen des Transmissionsgrades an den Abstand der Strahlteiler zu der Lichtquelle kann wiederum gewährleistet werden, dass das Sichtfeld über die gesamte Länge homogen beziehungsweise gleichmäßig ausgeleuchtet wird.

Dabei kann vorgesehen sein, dass die optische Erfassungsvorrichtung zu den Abtastrichtungen korrespondierende Linsenelemente aufweist, welche in einem Strahlengang zwischen den Strahlteilern und dem Bereich angeordnet sind und dazu ausgebildet sind, den von den Strahlteilern entlang der jeweiligen Abtastrichtung reflektierten Lichtstrahl in den Bereich zu transmittieren und den aus dem Bereich entlang der jeweiligen Abtastrichtung reflektierten Teil des Lichtstrahls aus dem Bereich zu dem Strahlteiler zu transmittieren. Die jeweiligen Linsenelemente sind also insbesondere senkrecht zu der Lichtführungseinrichtung vor den Strahlteilern angeordnet. Die Lichtstrahlen, welche von dem jeweiligen Strahlteiler in Richtung des jeweiligen Linsenelementes reflektiert werden, treten also durch das jeweilige Linsenelement in den Bereich aus und werden dabei aufgeweitet. Das in dem Bereich reflektierte Licht wird durch das jeweilige Linsenelement wieder dem Strahlteiler zugeführt, welcher das reflektierte Licht der zweiten Lichtführungseinrichtung zuführt. Gemäß dieser Ausführungsform nutzen die Sendeeinrichtung und die Empfangseinrichtung dieselben Linsenelemente beziehungsweise dieselbe Kollimatoroptik, wodurch die Sichtfelder der Sendeeinrichtung und der Empfangseinrichtung aneinander angepasst werden können. Außerdem kann die optische Erfassungsvorrichtung somit besonders einfach und platzsparend ausgebildet werden.

Die Erfindung betrifft außerdem ein Anbauteil für ein Kraftfahrzeug aufweisend zumindest eine optische Erfassungsvorrichtung, wobei die Lichtführungseinrichtungen an einer dem Bereich abgewandten Oberfläche des Anbauteils angeordnet sind und dazu ausgelegt sind, das Licht entlang der Oberfläche des Anbauteils zu führen. Insbesondere weist das Anbauteil zu den Einkoppelelementen und den Auskoppelelementen korrespondierende Durchgangsöffnungen zum Bereitstellen eines optischen Pfads zwischen dem an das Anbauteil angrenzenden Bereich und den Lichtführungseinrichtungen auf. Vorzugsweise ist das Anbauteil als ein Stoßfänger oder eine Innenraumkomponente des Kraftfahrzeugs ausgebildet. Dabei sind die Lichtführungseinrichtungen, die Lichtquelle und der Sensor dabei insbesondere an einer Rückseite des Anbauteils angeordnet, wobei sich die Lichtführungseinrichtungen zumindest bereichsweise über eine Länge des Anbauteils erstrecken. Die Lichtführungseinrichtungen können sich dabei parallel zu einer Kontur beziehungsweise einem Oberflächenverlauf, welcher beispielsweise gewölbt sein kann, erstrecken und das Licht entlang der Oberfläche leiten.

Ein erfindungsgemäßes Kraftfahrzeug umfasst zumindest ein erfindungsgemäßes Anbauteil. Das Kraftfahrzeug ist insbesondere als ein Personenkraftwagen ausgebildet. Die an dem Anbauteil angeordnete optische Erfassungsvorrichtung kann Objekte in dem an das Anbauteil angrenzenden Bereich erfassen. Beispielsweise können Hindernisse in einem Umgebungsbereich außerhalb des Kraftfahrzeugs erfasst werden. Informationen über das Hindernis, beispielsweise eine relative Lage des Hindernisses zu dem Kraftfahrzeug, können einer Steuereinrichtung des Kraftfahrzeugs zugeführt werden, welche daraufhin Assistenzfunktionen ausführen kann. Beispielsweise kann die Steuereinrichtung das Kraftfahrzeug autonom einparken. Außerdem können Gesten eines Fahrers des Kraftfahrzeugs erkannt werden, welche der Fahrer mit seinen Händen in einer Fahrgastzelle des Kraftfahrzeugs zum Bedienen von Einrichtungen des Kraftfahrzeugs, beispielsweise Infotainmentkomponenten, durchführt.

Die mit Bezug auf die erfindungsgemäße optische Erfassungsvorrichtung vorgestellten bevorzugten Ausführungsformen und deren Vorteile gelten entsprechend für das erfindungsgemäße Anbauteil sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Dabei zeigen:
- Fig. 1: eine schematische Darstellung einer Ausführungsform eines erfindungsgemäßen Kraftfahrzeugs in einer Draufsicht;
- Fig. 2: eine schematische Darstellung eines Innenraums einer Ausführungsform eines erfindungsgemäßen Kraftfahrzeugs;
- Fig. 3: eine schematische Darstellung einer Ausführungsform eines erfindungsgemäßen Kraftfahrzeugs in einer Seitenansicht;
- Fig. 4a, 4b: schematische Darstellungen einer Sendeeinrichtung und einer Empfangseinrichtung einer Ausführungsform einer optischen Erfassungsvorrichtung;
- Fig. 5: eine schematische Darstellung von Strahlengängen eines Lichtstrahls an einer Grenzfläche zwischen zwei Medien;
- Fig. 6: eine schematische Darstellung eines Strahlengangs eines Lichtstrahls in einem Lichtwellenleiter einer Sendeeinrichtung;
- Fig. 7: eine schematische Darstellung einer weiteren Ausführungsform einer erfindungsgemäßen optischen Erfassungsvorrichtung.

In den Figuren sind gleiche oder funktionsgleiche Elemente mit den gleichen Bezugszeichen versehen.

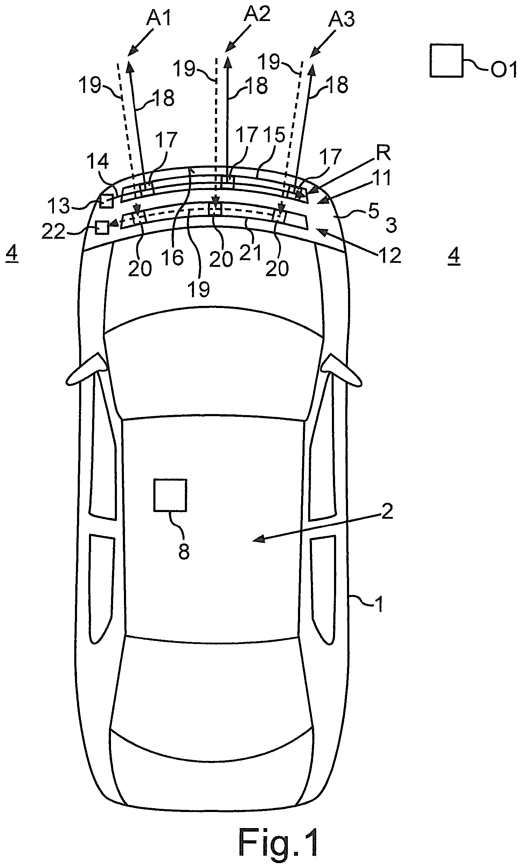

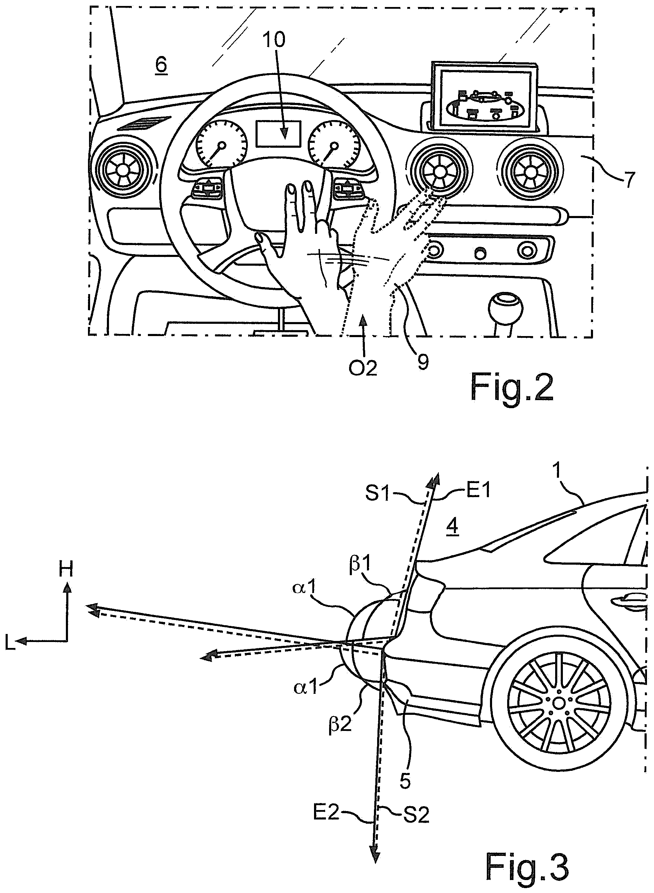

Fig. 1 zeigt ein Kraftfahrzeug 1, welches im vorliegenden Fall als ein Personenkraftwagen ausgebildet ist. Das Kraftfahrzeug 1 weist ein Fahrerassistenzsystem 2 auf, welches einen Fahrer des Kraftfahrzeugs 1 beim Führen des Kraftfahrzeugs 1 unterstützen kann. Dazu weist das Fahrerassistenzsystem 2 eine optische Erfassungsvorrichtung 3 auf, welche dazu ausgebildet ist, einen Bereich des Kraftfahrzeugs 1 zu überwachen. Dazu ist die optische Erfassungsvorrichtung 3 an einem an den Bereich angrenzenden Anbauteil des Kraftfahrzeugs 1 angeordnet. Im vorliegenden Fall überwacht die optische Erfassungsvorrichtung 3 als den Bereich einen Umgebungsbereich 4 außerhalb des Kraftfahrzeugs 1. Dazu ist die optische Erfassungsvorrichtung 3 hier an einem Stoßfänger 5 als das Anbauteil, insbesondere an einer dem Bereich abgewandten Rückseite des Stoßfängers 5, angeordnet. Die Erfassungsvorrichtung 3 kann dabei an einem frontseitigen Stoßfänger 5 und/oder an einem heckseitigen Stoßfänger 5 angeordnet sein. Es kann aber auch vorgesehen sein, dass, wie in Fig. 2 gezeigt, die optische Erfassungsvorrichtung 3 als den Bereich einen Innenraum 6 beziehungsweise eine Fahrgastzelle eines Kraftfahrzeugs 1 überwacht und dazu an einer Rückseite einer Innenraumkomponente 7 als das Anbauteil angeordnet ist. Die Innenraumkomponente 7 kann beispielsweise ein Innenverkleidungsteil und/oder auch ein Lenkrad des Kraftfahrzeugs 1 sein.

Die optische Erfassungsvorrichtung 3 ist zum Überwachen des Bereiches 4, 6 dazu ausgelegt, Objekte O1 (siehe Fig. 1), O2 (siehe Fig. 2) in dem Bereich 4, 6 zu erfassen sowie deren Lage bezüglich des Anbauteils 5, 7, also einen Abstand sowie eine Orientierung der Objekte O1, O2, zu bestimmen. Gemäß Fig. 1 kann die Erfassungsvorrichtung 3 als das Objekt O1 beispielsweise ein Hindernis für das Kraftfahrzeug 1 erfassen, sodass eine Steuereinrichtung 8 des Fahrerassistenzsystems 2 das Kraftfahrzeug 1 beispielsweise automatisch abbremsen kann, um eine Kollision des Kraftfahrzeugs 1 mit dem Hindernis zu vermeiden, und/oder das Kraftfahrzeug 1 autonom einparken kann. Gemäß Fig. 2 kann die Erfassungsvorrichtung 3 als das Objekt O2 beispielsweise eine Hand 9 eines Fahrers des Kraftfahrzeugs 1 erfassen, um anhand einer Lageänderung der Hand 9 eine Geste des Fahrers zu erkennen. Basierend auf der Geste kann die Steuereinrichtung 8 Assistenzfunktionen durchführen, beispielsweise Infotainmentkomponenten wie eine Anzeigeeinrichtung 10 des Kraftfahrzeugs 1 steuern.

Die optische Erfassungsvorrichtung 3, deren Funktionsweise hier beispielhaft anhand von Fig. 1 beschrieben ist und deren Funktionsweise auf das Ausführungsbeispiel gemäß Fig. 2 übertragbar ist, ist als ein Lidar-System ausgebildet und weist eine Sendeeinrichtung 11 und eine Empfangseinrichtung 12 auf. Die Sendeeinrichtung 11 weist eine Lichtquelle 13 auf, welche dazu ausgelegt ist, Licht 14, beispielsweise Laserlicht, zu emittieren. Außerdem weist die Sendeeinrichtung eine erste Lichtführungseinrichtung 15 auf, welche das von der Lichtquelle 13 emittierte Licht 14 entlang einer Oberfläche 16 des Anbauteils 5, hier entlang der Rückseite des Anbauteils 5, führt. Die Oberfläche 16 des Anbauteils 5 kann dabei gewölbt sein. Die erste Führungseinrichtung 15 führt das Licht 14 entlang einer Lichtführungsrichtung R beziehungsweise Lichtausbreitungsrichtung, welche im Wesentlichen parallel zu der Oberfläche 16 und entlang einer Länge des Anbauteils 5 orientiert ist. Außerdem weist die Sendeeinrichtung 11 Auskoppelelemente 17 auf, welche dazu ausgelegt sind, Teile des geführten Lichtes 14 abzuzweigen und als Lichtstrahlen 18, welche entlang unterschiedlicher Abtastrichtungen A1, A2, A3 orientiert sind, in den Umgebungsbereich 4 auszusenden. Dabei ist jeder Abtastrichtung A1, A2, A3 ein Auskoppelelement 17 zum Erzeugen des entlang der jeweiligen Abtastrichtung A1, A2, A3 orientierten Lichtstrahls 18 zugeordnet.

Die entlang der Abtastrichtungen A1, A2, A3 reflektierten Teile 19 der Lichtstrahlen 18 werden von der Empfangseinrichtung 12 wieder empfangen. Dazu weist die Empfangseinrichtung 12 Einkoppelelemente 20 auf, welche dazu ausgelegt sind, die reflektieren Teile 19 in eine zweite Lichtführungseinrichtung 21 der Empfangseinrichtung 12 einzukoppeln. Dabei ist jedem Einkoppelelement 20 eine der Abtastrichtungen A1, A2, A3 zugeordnet. Die zweite Lichtführungseinrichtung 21 führt die reflektierten Teile 19 einem lichtempfindlichen Sensor 22 der Empfangseinrichtung 12 zu, wobei der lichtempfindliche Sensor 22 und die Lichtquelle 13 auf einem gemeinsamen Träger angeordnet sein können. Anhand einer Laufzeit des Lichts 18, 19 also anhand einer Laufzeit zwischen dem Aussenden der Lichtstrahlen 18 und dem Empfangen der reflektieren Teile 19 der Lichtstrahlen 18, kann der Abstand des Objektes O1 zu dem Anbauteil 5 bestimmt werden.

In Fig. 3 ist das Kraftfahrzeug 1 in einer Seitenansicht gezeigt. Hier sind hinter dem Stoßfänger 5 des Kraftfahrzeugs 1, also an einer hier nicht gezeigten Rückseite des Stoßfängers 5, zwei optische Erfassungsvorrichtungen 3 angeordnet, welche unterschiedliche Sendesichtfelder S1, S2 und unterschiedliche Empfangssichtfelder E1, E2 aufweisen. Die Sendeeinrichtung 11 der ersten Erfassungsvorrichtung 3 orientiert die Lichtstrahlen 18 hier schräg nach oben. Damit wird, bezogen auf eine Fahrzeuglängsrichtung L des Kraftfahrzeugs 1 ein erstes Sendesichtfeld S1 der Sendeeinrichtung 11, dessen vertikaler Öffnungswinkel α1 hier gezeigt ist, in Fahrzeughochrichtung H schräg nach oben orientiert beziehungsweise nach oben verschwenkt. Damit wird auch ein Empfangssichtfeld E1 der Empfangseinrichtung 12, dessen vertikaler Öffnungswinkel β1 hier gezeigt ist, in Fahrzeughochrichtung H nach oben verschwenkt. Die Sendeeinrichtung 11 der zweiten Erfassungsvorrichtung 3 sendet die Lichtstrahlen 18 schräg nach unten aus. Damit wird, bezogen auf eine Fahrzeuglängsachse L ein Sendesichtfeld S2 der Sendeeinrichtung 11, dessen vertikaler Öffnungswinkel α2 hier gezeigt ist, entgegen der Fahrzeughochrichtung H nach unten verschwenkt. Damit wird auch ein Empfangssichtfeld E2 der Empfangseinrichtung 12, dessen vertikaler Öffnungswinkel β2 hier gezeigt ist, entgegen der Fahrzeughochrichtung H nach unten verschwenkt. Mittels der ersten Erfassungsvorrichtung 3 können beispielsweise Fußgänger in dem Umgebungsbereich 4 des Kraftfahrzeugs 1 erkannt werden. Mittels der zweiten Erfassungsvorrichtung 3 können beispielsweise bodennahe Objekte, wie Bordsteine, erkannt werden.

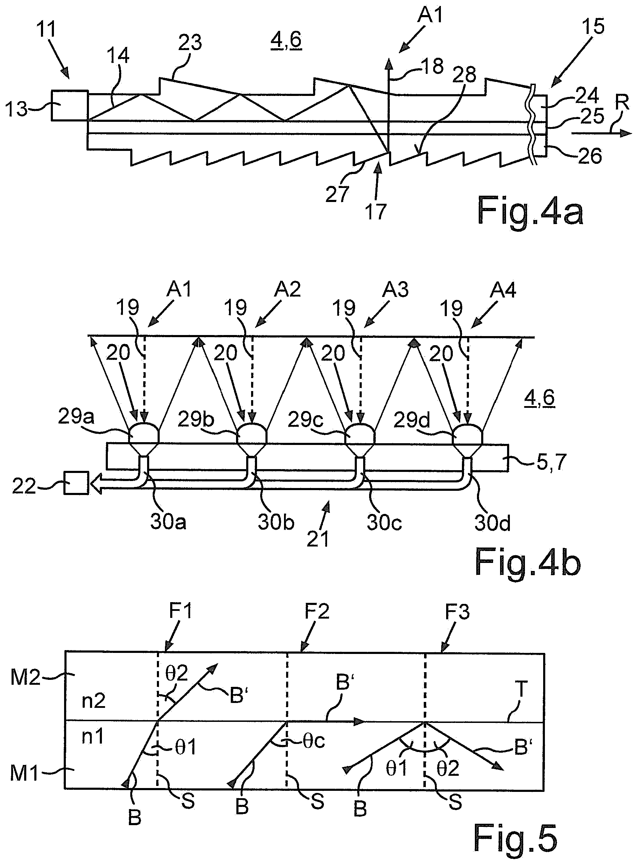

Fig. 4a zeigt eine Sendeeinrichtung 11 gemäß einer ersten Ausführungsform der optischen Erfassungsvorrichtung 3. Fig. 4b zeigt eine Empfangseinrichtung 12 gemäß der ersten Ausführungsform der optischen Erfassungsvorrichtung 3. Gemäß Fig. 4a ist die erste Lichtführungseinrichtung 15 der Sendeeinrichtung 11 als ein Lichtwellenleiter 23 ausgebildet. Der länglich geformte Lichtwellenleiter 23 ist hier schichtweise aufgebaut und weist eine erste Hauptschicht 24 mit einem spezifischen Brechungsindex sowie eine zweite Schicht 25 mit einem spezifischen Brechungsindex auf. Der Lichtwellenleiter 23 ist dazu ausgelegt, das von der Lichtquelle 13 emittierte Licht 14 entlang der Lichtführungsrichtung R durch Totalreflexion zu leiten. Außerdem ist der Lichtwellenleiter 23 bereichsweise von einer reflektierenden Schicht 26 mit einem spezifischen Brechungsindex umgeben beziehungsweise ummantelt, welche sich entlang einer Länge des Lichtwellenleiters 23 erstreckt.

Das Prinzip der Lichtausbreitung in einem Medium M1 ist anhand von verschiedenen Strahlengängen F1, F2, F3 in Fig. 5 dargestellt. Ein Lichtstrahl B, der aus einem optisch dichteren Medium M1, beispielsweise Wasser, mit einem ersten Brechungsindex n1 auf eine Grenzfläche T zwischen dem optischen dichteren Medium M1 und einem optisch dünneren Medium M2, beispielsweise Luft, mit einem zweiten Brechungsindex n2 trifft, wird gemäß dem snelliusschen Brechungsgesetz vom Einfallslot S weg gebrochen. Das Einfallslot S ist senkrecht zu der Grenzfläche T orientiert. In Fig. 5 ist anhand eines ersten Strahlengangs F1 gezeigt, dass ein Brechungswinkel θ2 zwischen dem Einfallslot S und dem gebrochenen Lichtstrahl B' größer ist als ein Einfallswinkel θ1 zwischen dem Lichtstrahl B und dem Einfallslot S. Wird der Einfallswinkel θ1 vergrößert, so verläuft der gebrochene Lichtstrahl B' bei einem bestimmten Wert, wie in Fig. 5 anhand eines zweiten Strahlengangs F2 dargestellt ist, parallel zur Grenzfläche T. Dieser Winkel wird Grenzwinkel der Totalreflexion oder auch kritischer Winkel θc genannt. Für Einfallswinkel θ1 des Lichtstrahls B größer als θc wird der Lichtstrahl B, anstatt gebrochen zu werden, vollständig an der Grenzfläche T reflektiert. Der Reflexionswinkel θ2 ist gleich dem Einfallswinkel θ1. Die Totalreflexion ist in Fig. 5 anhand eines dritten Strahlengangs F3 dargestellt.

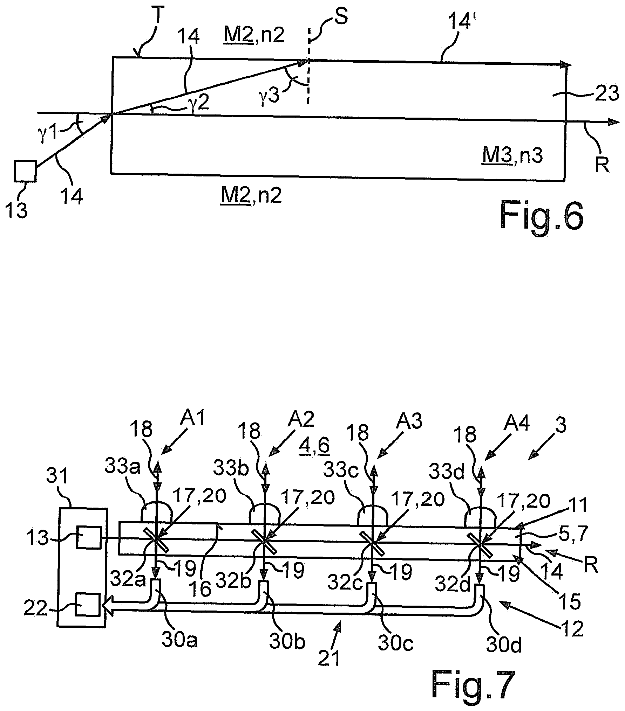

Der Lichtwellenleiter 23 bildet, wie in Fig. 6 gezeigt, ein drittes Medium M3 mit einem dritten Brechungsindex n3 aus. Das dritte Medium M3 ist insbesondere PMMA (Polymethylmethacrylat). Um nun das von der Lichtquelle 13 emittierte Licht 14 mittels Totalreflexion in dem Lichtwellenleiter 23 zu leiten, muss das von der Lichtquelle 13 emittierte Licht 14 zunächst einen ersten Winkel γ1, unter welchem das Licht 14 aus dem zweiten Medium M2, beispielsweise Luft, über eine senkrecht zu einer Ausbreitungsrichtung R orientierten Einkoppelfläche in das dritte Medium M3 eindringt, überschreiten. Das hier unter dem ersten Winkel γ1 eindringende Licht 14 wird unter einem zweiten Winkel γ2 bezüglich der Lichtausbreitungsrichtung R gebrochen. Durch das unter dem zweiten Winkel γ2 gebrochenen Licht 14 trifft dieses unter einem dritten Winkel γ3 bezüglich des Einfallslots S auf die Grenzfläche T zwischen dem dritten Medium M3 und dem zweiten Medium M2 auf. Dieser dritte Winkel γ3 entspricht hier dem kritischen Winkel θc, wodurch das gebrochene Licht 14' parallel zu der Grenzfläche T geführt wird. Sobald der Einfallswinkel größer als der dritte Winkel γ3 wird, wird das Licht 14 total reflektiert und in dem Lichtwellenleiter 23 geleitet. Zur beispielhaften Berechnung der Winkel γ1, γ2, γ3 kann das snelliussche Brechungsgesetz n1*sin(θ1) = n2*sin(θ2) verwendet werden. Angewendet auf die Winkel γ1, γ2, γ3 und unter Kenntnis der Brechungsindizes n2=1 für Luft und n3=1,485 für PMMA ergeben sich mittels des snelliusschen Brechungsgesetzes 1,485*sin(γ3) = 1*sin(90°) für den dritten Winkel γ3≥42,3° und für den zweiten Winkel γ2≤47,7°. Gemäß 1,485*sin(γ2) = 1*sin(γ21) ist der erste Winkel γ1>90°.

Um nun das von der Lichtquelle 13 emittierte Licht 14 der Sendeeinrichtung 11 gemäß Fig. 4a in den Bereich 4, 6 auszusenden, also aus dem Lichtwellenleiter 23 auszukoppeln, wird die Totalreflexion des Lichtes 14 an der Grenzfläche T unterbrochen. Dazu weist der Lichtwellenleiter 23 die reflektierende Schicht 26 mit einer reflektierenden Mikrostruktur 28 auf, welche hier sägezahnförmig ausgebildet ist. Strukturbereiche 27 der reflektierenden Mikrostruktur 28 bilden die Auskoppelelemente 17 aus. Die Strukturbereiche 27, von welchen hier lediglich der zu der ersten Abtastrichtung A1 korrespondierende Strukturbereich 27 dargestellt ist, unterbrechen die Totalreflexion und können einen Teil des Lichts 14 in Richtung des Bereiches 4, 6 reflektieren, wobei der Teil des Lichts 14 als entlang der Abtastrichtung A1 orientierter Lichtstrahl 18 in den Bereich 4, 6 austritt. Die Abtastrichtung A1, entlang welcher der Lichtstrahl 18 austritt, kann durch eine Dichte, eine Größe, eine Tiefe und eine Kantenschärfe der Mikrostruktur 28 beeinflusst werden.

Insbesondere weisen die Strukturbereiche 27 dabei entlang der Lichtführungsrichtung R unterschiedliche Reflektivitäten beziehungsweise Reflexionsgrade auf. Ausgehend von der Lichtquelle 13 nimmt der Reflexionsgrad der Strukturbereiche 27 zu. Dies bedeutet, dass ein erster Strukturbereich 27 mit einem ersten Abstand zur Lichtquelle 13 eine erste Reflektivität aufweist, ein zweiter Strukturbereich 27 mit einem im Vergleich zum ersten Abstand größeren zweiten Abstand zur Lichtquelle 13 eine im Vergleich zur ersten Reflektivität größere zweite Reflektivität aufweist, etc. Dadurch vergrößert sich mit steigendem Abstand der Strukturbereiche 27 zu der Lichtquelle 13 ein jeweiliger Anteil des ausgekoppelten Lichtes 18 an dem in dem Lichtwellenleiter 23 geführten Licht 14. Durch das Auskoppeln des Lichtes 18 entlang der Lichtführungsrichtung R wird nämlich die Lichtmenge mit steigendem Abstand zur Lichtquelle 13 verringert. Um dennoch ein homogen ausgeleuchtetes Sendesichtfeld S1, S2 zu erhalten, wird der Reflexionsgrad der Strukturbereich 27 angepasst.

Fig. 4b zeigt die zu der Sendeeinrichtung 11 gemäß Fig. 4a korrespondierende Empfangseinrichtung 12. Die Empfangseinrichtung 12 weist als die Einkoppelelemente 20 hier Linsenelemente 29a, 29b, 29c, 29d auf, wobei hier jeder Abtastrichtung A1, A2, A3, A4 ein Linsenelement 29a, 29b, 29c, 29d zugeordnet ist. Die Linsenelemente 29a, 29b, 29c, 29d sind angrenzend an den Bereich 4, 6 angeordnet, beispielsweise an einer Vorderseite des Anbauteils 5, 7. Insbesondere sind die Linsenelemente 29a, 29b, 29c, 29d zumindest teilweise in das Anbauteil 5, 7 versenkt. Jedes Linsenelement 29a, 29b, 29c, 29d ist dazu ausgelegt, den aus der jeweiligen Abtastrichtung A1, A2, A3, A4 reflektierten Teil 19 des Lichtstrahls 18 einzusammeln und in die zweite Lichtführungseinrichtung 21 einzukoppeln. Die zweite Lichtführungseinrichtung 21 weist für jede Abtastrichtung A1, A2, A3, A4 beziehungsweise jeden Abtastrichtungsbereich einen Lichtwellenleiter 30a, 30b, 30c, 30d auf, welcher dazu ausgelegt ist, den durch das jeweilige Linsenelement 29a, 29b, 29c, 29d eingekoppelten Teil 19 des Lichtstrahls 18 zu leiten. Dazu ist jeder Lichtwellenleiter 30a, 30b, 30c, 30d mit einem der Linsenelemente 29a, 29b, 29c, 29d optisch gekoppelt, wobei jeder Lichtwellenleiter 30a, 30b, 30c, 30d mit dem dazugehörigen Linsenelement 29a, 29b, 29c, 29d einen Empfangskanal ausbildet. Die Anzahl an Empfangskanälen ist dabei insbesondere abhängig von dem zu erzeugenden Empfangssichtfeld E1, E2 und dem zu erfassenden Zielbereich beziehungsweise Bereich 4, 6.

Außerdem ist jeder Lichtwellenleiter 30a, 30b, 30c, 30d mit jeweils einem Sensorbereich des Sensors 22 gekoppelt, wobei jeder Sensorbereich insbesondere nur das aus der dem Lichtwellenleiter 30a, 30b, 30c, 30d zugeordneten Abtastrichtung A1, A2, A3, A4 erfasst. Sobald also ein Sensorbereich den reflektierten Teil 19 des Lichtstrahls 18 empfängt, ist bereits die Abtastrichtung A1, A2, A3, A4 bekannt, aus welcher der Teil 19 des Lichtstrahls 18 reflektiert wurde. Der Sensor 22 ist also winkelauflösend, da jeder Sensorbereich anhand des zugehörigen Lichtwellenleiters 30a, 30b, 30c, 30d und des zu dem Lichtwellenleiter 30a, 30b, 30c, 30d gehörenden Linsenelementes 29a, 29b, 29c, 29d die jeweilige Abtastrichtung A1, A2, A3, A4 und damit die Orientierung des Objektes O1, O2 erkennen kann. Anhand einer Laufzeit des Lichtes kann der Sensorbereich den Abstand des Objektes O1, O2 zu dem Anbauteil 5, 7 erkennen.

Fig. 7 zeigt eine weitere Ausführungsform der optischen Erfassungsvorrichtung 3. Die Lichtquelle 13 und der Sensor 22 sind auf einem gemeinsamen Träger 31 angeordnet. Das erste Führungselement 15 ist dabei durch Strahlteiler 32a, 32b, 32c, 32d ausgebildet, welche ausgehend von der Lichtquelle 13 in Lichtführungsrichtung R entlang der Oberfläche 16 des Anbauteils 5, 7 beabstandet zueinander angeordnet sind. Zum Führen des von der Lichtquelle 13 emittierten Lichtes 14 können die Strahlteiler 32a, 32b, 32c, 32d jeweilige Teile des Lichtes 14 transmittieren. Dies bedeutet, dass der erste Strahlteiler 32a, welcher zu der ersten Abtastrichtung A1 korrespondiert, einen Teil des Lichtes 14 in Lichtführungsrichtung R zu einem zweiten Strahlteiler 32b transmittiert, welcher zu der zweiten Abtastrichtung A2 korrespondiert, und dass der erste Strahlteiler 32a einen Teil des Lichtes 14 senkrecht zur Lichtführungsrichtung R reflektiert. Das reflektierte Licht wird als Lichtstrahl 18 entlang der Abtastrichtung A1 in den Bereich 4, 6 ausgesendet. Der von dem ersten Strahlteiler 32a zu dem zweiten Strahlteiler 32b transmittierte Teil des Lichtes 14 wird wiederum teilweise transmittiert und teilweise reflektiert. Der von dem zweiten Strahlteiler 32b reflektierte Teil wird als entlang der zweiten Abtastrichtung A2 orientierter Lichtstrahl 18 in den Bereich 4, 6 ausgesendet. Der transmittierte Teil wird einem dritten Strahlteiler 32c zugeführt, welcher zu der dritten Abtastrichtung A3 korrespondiert, etc. Die Strahlteiler 32a, 32b, 32c, 32d fungieren also zusätzlich als die Auskoppelelemente 17.

Dabei nimmt eine Transmissivität der Strahlteiler 32a, 32b, 32c, 32d entlang der Lichtausbreitungsrichtung R, mit steigendem Abstand zur Lichtquelle 13 ab. Dies bedeutet, dass der durch die Strahlteiler 32a, 32b, 32c, 32d transmittierte Anteil des dem jeweiligen Strahlteiler 32a, 32b, 32c, 32d zugeführten Lichts 14 mit steigendem Abstand zur Lichtquelle 13 kleiner wird. Dadurch kann gewährleistet werden, dass eine Lichtmenge des als Lichtstrahl 18 ausgekoppelten Lichtes 14 in etwa gleich groß bleibt, sodass der Bereich 4, 6 homogen beziehungsweise gleichmäßig ausgeleuchtet wird. Zum Aufweiten der Lichtstrahlen 18 und damit zum Vergrößern des Sichtfeldes S1, S2, E1, E2 der optischen Erfassungsvorrichtung 3 weist diese Linsenelemente 33a, 33b, 33c, 33d beziehungsweise Kollimatorlinsen auf, welche als Mikrolinsen ausgebildet sein können und in einem optischen Pfad zwischen den Strahlteilern 32a, 32b, 32c, 32d und dem Bereich 4, 6 angeordnet sind.

Über die Linsenelemente 33a, 33b, 33c, 33d, welche zumindest bereichsweise in dem Anbauteil 5, 7 angeordnet sind, kann der reflektierte Teil 19 des Lichtstrahls 18 wieder der Empfangseinrichtung 12 zugeführt werden. Der aus der jeweiligen Abtastrichtung A1, A2, A3, A4 reflektierte Teil 19 der Lichtstrahlen 18 wird dabei den Strahlteilern 32a, 32b, 32c, 32d zugeführt, welche den jeweiligen Teil 19 der Lichtstrahlen 19 zu Lichtwellenleitern 30a, 30b, 30c, 30d der Empfangseinrichtung 12 transmittiert. Die Strahlteiler 32a, 32b, 32c, 32d bilden also auch die Einkoppelelemente 20 der Empfangseinrichtung 12 aus. Die Lichtwellenleiter 30a, 30b, 30c, 30d führen den aus der jeweiligen Abtastrichtung A1, A2, A3, A4 stammenden Teil 19 des Lichtstrahls 19 dem zugeordneten Sensorbereich des Sensors 22 zu, welcher die Orientierung des Objektes O1, O2 sowie den Abstand des Objektes O1, O2 bestimmen kann. Hier bilden also jeweils ein Strahlteiler 32a, 32b, 32c, 32d und ein Lichtwellenleiter 30a, 30b, 30c, 30d einen Empfangskanal aus. Gemäß der Ausführungsform der optischen Erfassungsvorrichtung 3 nach Fig. 7 nutzen also die Sendeeinrichtung 11 und die Empfangseinrichtung 12 dieselben Linsenelemente 33a, 33b, 33c, 33d.

Zusammenfassend ist die optische Erfassungsvorrichtung 3 flexibel formbar ausgestaltet, sodass hinsichtlich des Einbauortes der optischen Erfassungsvorrichtung 3 am Kraftfahrzeug 1 kaum Einschränkungen gegeben sind. Somit kann die optische Erfassungsvorrichtung platzsparend in Anbauteile 5, 7 integriert werden, sodass bei einer Formgebung des Anbauteils 5, 7 die optische Erfassungsvorrichtung 3 nicht berücksichtigt werden muss.

## Patentansprüche

1. Optische Erfassungsvorrichtung (3) für ein Kraftfahrzeug (1) zum Anordnen an einem Anbauteil (5, 7) des Kraftfahrzeugs (1) und zum Überwachen eines an das Anbauteil (5, 7) angrenzenden Bereiches (4, 6), mit einer Sendeeinrichtung (11) aufweisend eine Licht (14) emittierende Lichtquelle (13) und mit einer Empfangseinrichtung (12) aufweisend einen lichtempfindlichen Sensor (22), wobei die Sendeeinrichtung (11) dazu ausgelegt ist, Lichtstrahlen (18) entlang vorbestimmter Abtastrichtungen (A1, A2, A3, A4) in den Bereich (4, 6) auszusenden, und die Empfangseinrichtung (12) dazu ausgelegt ist, in dem Bereich (4, 6) reflektierte Teile (19) der Lichtstrahlen (18) zu empfangen,
wobei die Sendeeinrichtung (11) eine erste Lichtführungseinrichtung (15) zum Führen des von der Lichtquelle (13) emittierten Lichts (14) parallel zu einer Oberfläche (16) des Anbauteils (5, 7) und zumindest zwei, zu jeweiligen Abtastrichtungen (A1, A2, A3, A4) korrespondierende Auskoppelelemente (17) zum Auskoppeln von Teilen des geführten Lichtes (14) als die entlang der jeweiligen Abtastrichtung (A1, A2, A3, A4) orientierten Lichtstrahlen (18) aufweist, und die Empfangseinrichtung (12) zumindest zwei, zu jeweiligen Abtastrichtungen (A1, A2, A3, A4) korrespondierende Einkoppelelemente (20) zum Einkoppeln der entlang der jeweiligen Abtastrichtung (A1, A2, A3, A4) aus dem Bereich (4, 6) reflektierten Teile (19) der Lichtstrahlen (18) und eine zweite Lichtführungseinrichtung (21) zum Führen der eingekoppelten Teile (19) der Lichtstrahlen (18) zu dem lichtempfindlichen Sensor (22) aufweist,
und wobei die erste Lichtführungseinrichtung (15) einen Lichtwellenleiter (23) zum Leiten des von der Lichtquelle (13) emittierten Lichts (14) parallel zu der Oberfläche (16) des Anbauteils (5, 7) aufweist, wobei der Lichtwellenleiter (23) zum Ausbilden der Auskoppelelemente (17) zumindest zwei, mit jeweiligen Abtastrichtungen (A1, A2, A3, A4) korrespondierende Reflexionselemente aufweist, welche dazu ausgelegt sind, einen jeweiligen Teil des in dem Lichtwellenleiter (23) geleiteten Lichtes (14) entlang der jeweiligen Abtastrichtung (A1, A2, A3, A4) in den Bereich (4, 6) zu reflektieren,
**dadurch gekennzeichnet, dass**
die erste Lichtführungseinrichtung (15) eine sich entlang einer Länge des Lichtwellenleiters (23) erstreckende, den Lichtwellenleiter (23) bereichsweise umgebende Schicht (26) mit einer reflektierenden Struktur (28) aufweist, wobei die Reflexionselemente als Strukturbereiche (27) der reflektierenden Struktur (28) ausgebildet sind und dazu ausgelegt sind, Teile des in dem Lichtwellenleiter (23) geführten Lichtes (14) als die Lichtstrahlen (18) in den an das Anbauteil (5, 7) angrenzenden Bereich (4, 6) zu reflektieren.

2. Optische Erfassungsvorrichtung (3) nach Anspruch 1,
**dadurch gekennzeichnet, dass**
die Lichtquelle (13) und der lichtempfindliche Sensor (22) auf einem gemeinsamen Träger (31) angeordnet sind, wobei die erste Lichtführungseinrichtung (15) dazu ausgelegt ist, das von der Lichtquelle (13) emittierte Licht (14) ausgehend von dem Träger (31) entlang der Oberfläche (16) des Anbauteils (5, 7) zu führen und die zweite Lichtführungseinrichtung (21) dazu ausgelegt ist, die reflektierten Teile (19) der Lichtstrahlen (18) entlang der Oberfläche (16) zu dem Träger (31) zurückzuführen.

3. Optische Erfassungsvorrichtung (3) nach Anspruch 1 oder 2,
**dadurch gekennzeichnet, dass**
die zweite Lichtführungseinrichtung (21) mit den Abtastrichtungen (A1, A2, A3, A4) korrespondierende Lichtwellenleiter (30a, 30b, 30c, 30d) aufweist, wobei jeder Lichtwellenleiter (30a, 30b, 30c, 30d) mit einem der Einkoppelelemente (20) optisch gekoppelt ist und dazu ausgelegt ist, den jeweiligen entlang der Abtastrichtung (A1, A2, A3, A4) aus dem Bereich (4, 6) reflektierten Teil (19) der Lichtstrahlen (18) zu dem lichtempfindlichen Sensor (22) zu leiten.

4. Optische Erfassungsvorrichtung (3) nach Anspruch 3,
**dadurch gekennzeichnet, dass**
jeder Lichtwellenleiter (30a, 30b, 30c, 30d) mit jeweils einem Sensorbereich, der zumindest ein Sensorelement des lichtempfindlichen Sensors (22) aufweist, optisch gekoppelt ist.

5. Optische Erfassungsvorrichtung (3) nach Anspruch 1,
**dadurch gekennzeichnet, dass**
die Reflexionselemente ausgehend von der Lichtquelle (13) beabstandet zueinander angeordnet sind, wobei eine Reflektivität der jeweiligen Reflexionselemente in Abhängigkeit von einem Abstand der jeweiligen Reflexionselemente zu der Lichtquelle (13) vorbestimmt ist.

6. Optische Erfassungsvorrichtung (3) nach Anspruch 1,
**dadurch gekennzeichnet, dass**
die reflektierende Struktur (28) der reflektierenden Schicht (26) sägezahnförmig ausgebildet ist.

7. Optische Erfassungsvorrichtung (3) nach Anspruch 1 oder 6,
**dadurch gekennzeichnet, dass**
die Empfangseinrichtung (12) zum Ausbilden der Einkoppelelemente (20) zu den Abtastrichtungen (A1, A2, A3, A4) korrespondierende Linsenelemente (29a, 29b, 29c, 29d) aufweist, welche dazu ausgelegt sind, die aus dem Bereich (4, 6) entlang der jeweiligen Abtastrichtungen (A1, A2, A3, A4) reflektierten Teile (19) der Lichtstrahlen (18) einzufangen und in die zweite Lichtführungseinrichtung (21) einzukoppeln.

8. Anbauteil (5, 7) für ein Kraftfahrzeug (1) aufweisend zumindest eine optische Erfassungsvorrichtung (3) nach einem der vorhergehenden Ansprüche, wobei die Lichtführungseinrichtungen (15, 21) der zumindest einen optischen Erfassungsvorrichtung (3) an einer dem Bereich (4, 6) abgewandten Seite des Anbauteils (5, 7) angeordnet sind und dazu ausgelegt sind, das Licht (14, 19) entlang der Oberfläche (16) der Seite des Anbauteils (5, 7) zu führen.

9. Anbauteil (5, 7) nach Anspruch 8,
**dadurch gekennzeichnet, dass**
das Anbauteil (5, 7) als ein Stoßfänger (5) oder eine Innenraumkomponente (7) des Kraftfahrzeugs (1) ausgebildet ist.

10. Kraftfahrzeug (1) mit zumindest einem Anbauteil (5, 7) nach Anspruch 8 oder 9.

## Claims

1. Optical detection device (3) for a motor vehicle (1) for arranging on an attached part (5, 7) of the motor vehicle (1) and for monitoring a region (4, 6) adjacent to the attached part (5, 7), with a transmitting apparatus (11) comprising a light source (13) emitting light (14) and with a receiving apparatus (12) comprising a light-sensitive sensor (22), wherein the transmitting apparatus (11) is designed to transmit light beams (18) along predetermined scanning directions (A1, A2, A3, A4) into the region (4, 6) and the receiving apparatus (12) is designed to receive fractions (19) of the light beams (18) reflected in the region (4, 6), wherein the transmitting apparatus (11) comprises a first light guidance apparatus (15) for guiding the light (14), emitted by the light source (13), parallel to a surface (16) of the attached part (5, 7) and at least two outcoupling elements (17) corresponding to respective scanning directions (A1, A2, A3, A4) for coupling out fractions of the guided light (14) as the light beams (18) oriented along the respective scanning direction (A1, A2, A3, A4) and the receiving apparatus (12) comprises at least two incoupling elements (20) corresponding to respective scanning directions (A1, A2, A3, A4) for coupling in the fractions (19) of the light beams (18) reflected out of the region (4, 6) along the respective scanning direction (A1, A2, A3, A4) and a second light guidance apparatus (21) for guiding the incoupled fractions (19) of the light beams (18) to the light-sensitive sensor (22),
and wherein the first light guidance apparatus (15) comprises an optical waveguide (23) for guiding the light (14), emitted by the light source (13), parallel to the surface (16) of the attached part (5, 7), wherein the optical waveguide (23) comprises at least two reflection elements corresponding to respective scanning directions (A1, A2, A3, A4) to form the outcoupling elements (17), said elements being designed to reflect a respective fraction of the light (14) guided in the optical waveguide (23) along the respective scanning direction (A1, A2, A3, A4) into the region (4, 6),
**characterized in that**
the first light guidance apparatus (15) comprises a layer (26) with a reflecting structure (28) partially surrounding the optical waveguide (23) and extending along a length of the optical waveguide (23), wherein the reflection elements are formed as structured regions (27) of the reflecting structure (28) and are designed to reflect fractions of the light (14) guided in the optical waveguide (23) as the light beams (18) into the region (4, 6) adjacent to the attached part (5, 7).

2. Optical detection device (3) according to Claim 1,
**characterized in that**
the light source (13) and the light-sensitive sensor (22) are arranged on a common carrier (31), wherein the first light guidance apparatus (15) is designed to guide the light (14), emitted by the light source (13), along the surface (16) of the attached part (5, 7) starting from the carrier (31), and the second light guidance apparatus (21) is designed to feed the reflected fractions (19) of the light beams (18) back along the surface (16) to the carrier (31).

3. Optical detection device (3) according to Claim 1 or 2,
**characterized in that**
the second light guidance apparatus (21) comprises optical waveguides (30a, 30b, 30c, 30d) corresponding to the scanning directions (A1, A2, A3, A4), wherein each optical waveguide (30a, 30b, 30c, 30d) is optically coupled to one of the incoupling elements (20) and is designed to guide the respective fraction (19) of the light beams (18) reflected out of the region (4, 6) along the scanning direction (A1, A2, A3, A4) to the light-sensitive sensor (22).

4. Optical detection device (3) according to Claim 3,
**characterized in that**
each optical waveguide (30a, 30b, 30c, 30d) is optically coupled to respectively one sensor region which comprises at least one sensor element of the light-sensitive sensor (22).

5. Optical detection device (3) according to Claim 1,
**characterized in that**
the reflection elements are arranged with a spacing from one another starting from the light source (13), wherein a reflectivity of the respective reflection elements is predetermined depending on a spacing of the respective reflection elements from the light source (13).

6. Optical detection device (3) according to Claim 1,
**characterized in that**
the reflecting structure (28) of the reflecting layer (26) has a sawtooth form.

7. Optical detection device (3) according to Claim 1 or 6,
**characterized in that**
the receiving apparatus (12) comprises lens elements (29a, 29b, 29c, 29d) corresponding to the scanning directions (A1, A2, A3, A4) for forming the incoupling elements (20), said lens elements being designed to capture the fractions (19) of the light beams (18) reflected out of the region (4, 6) along the respective scanning directions (A1, A2, A3, A4) and to couple them into the second light guidance apparatus (21).

8. Attached part (5, 7) for a motor vehicle (1) comprising at least one optical detection device (3) according to one of the preceding claims, wherein the light guidance apparatuses (15, 21) of the at least one optical detection device (3) are arranged at a side of the attached part (5, 7) facing away from the region (4, 6) and are designed to guide the light (14, 19) along the surface (16) of the side of the attached part (5, 7).

9. Attached part (5, 7) according to Claim 8,
**characterized in that**
the attached part (5, 7) is formed as a bumper (5) or an interior component (7) of the motor vehicle (1) .

10. Motor vehicle (1) comprising at least one attached part (5, 7) according to Claim 8 or 9.

## Revendications

1. Arrangement de détection optique (3) pour un véhicule automobile (1) destiné à être disposé au niveau d'une pièce rapportée (5, 7) du véhicule automobile (1) et à surveiller une zone (4, 6) adjacente de la pièce rapportée (5, 7), comprenant un dispositif émetteur (11) qui possède une source de lumière (13) émettant de la lumière (14) et comprenant un dispositif de réception (12) qui possède un capteur photosensible (22), le dispositif émetteur (11) étant conçu pour émettre des rayons lumineux (18) le long de directions de balayage (A1, A2, A3, A4) prédéterminées dans la zone (4, 6), et le dispositif de réception (12) étant conçu pour recevoir les parties (19) des rayons lumineux (18) réfléchies dans la zone (4, 6),
le dispositif émetteur (11) possédant un premier dispositif de guidage de lumière (15) destiné à guider la lumière (14) émise par la source de lumière (13) parallèlement à une surface (16) de la pièce rapportée (5, 7) et au moins deux éléments de découplage (17) correspondant aux directions de balayage (A1, A2, A3, A4) respectives et destinés à découpler des parties de la lumière (14) guidée sous la forme des rayons lumineux (18) orientés le long de la direction de balayage (A1, A2, A3, A4) respective, et le dispositif de réception (12) possédant au moins deux éléments d'injection par couplage (20) correspondant aux directions de balayage (A1, A2, A3, A4) respectives et destinés à l'injection par couplage des parties (19) des rayons lumineux (18) réfléchies depuis la zone (4, 6) le long de la direction de balayage (A1, A2, A3, A4) respective et un deuxième dispositif de guidage de lumière (21) destiné à guider les parties (19) des rayons lumineux (18) vers le capteur photosensible (22),
et le premier dispositif de guidage de lumière (15) possède une fibre optique (23) destinée à conduire la lumière (14) émise par la source de lumière (13) parallèlement à la surface (16) de la pièce rapportée (5, 7), la fibre optique (23) possédant, pour former les éléments de découplage (17), au moins deux éléments réfléchissants correspondant aux directions de balayage (A1, A2, A3, A4) respectives, lesquels sont conçus pour réfléchir une partie respective de la lumière (14) conduite dans la fibre optique (23) dans la zone (4, 6) le long de la direction de balayage (A1, A2, A3, A4) respective,
**caractérisé en ce que**
le premier dispositif de guidage de lumière (15) possède une couche (26) ayant une structure réfléchissante (28) qui entoure la fibre optique (23) dans certaines zones et qui s'étend le long de la fibre optique (23), les éléments réfléchissants étant réalisés sous la forme de zones structurées (27) de la structure réfléchissante (28) et étant conçus pour réfléchir dans la zone (4, 6) adjacente de la pièce rapportée (5, 7), sous la forme des rayons lumineux (18), des parties de la lumière (14) guidée dans la fibre optique (23).

2. Arrangement de détection optique (3) selon la revendication 1, **caractérisé en ce que** la source de lumière (13) et le capteur photosensible (22) sont disposés sur un élément porteur (31) commun, le premier dispositif de guidage de lumière (15) étant conçu pour guider la lumière (14) émise par la source de lumière (13) en partant de l'élément porteur (31) le long de la surface (16) de la pièce rapportée (5, 7) et le deuxième dispositif de guidage de lumière (21) étant conçu pour renvoyer les parties (19) réfléchies des rayons lumineux (18) le long de la surface (16) vers l'élément porteur (31) .

3. Arrangement de détection optique (3) selon la revendication 1 ou 2, **caractérisé en ce que** le deuxième dispositif de guidage de lumière (21) possède des fibres optiques (30a, 30b, 30c, 30d) correspondant aux directions de balayage (A1, A2, A3, A4), chaque fibre optique (30a, 30b, 30c, 30d) étant couplée optiquement avec l'un des éléments d'injection par couplage (20) et étant conçue pour conduire vers le capteur photosensible (22) la partie (19) respective des rayons lumineux (18) réfléchie depuis la zone (4, 6) le long de la direction de balayage (A1, A2, A3, A4).

4. Arrangement de détection optique (3) selon la revendication 3, **caractérisé en ce que** chaque fibre optique (30a, 30b, 30c, 30d) est couplée optiquement respectivement avec une zone de capteur de l'au moins un élément capteur du capteur photosensible (22).

5. Arrangement de détection optique (3) selon la revendication 1, **caractérisé en ce que** les éléments réfléchissants sont disposés espacés les uns des autres à partir de la source de lumière (13), une réflectivité des éléments réfléchissants respectifs étant prédéterminée en fonction d'un écart entre les éléments réfléchissants respectifs et la source de lumière (13).

6. Arrangement de détection optique (3) selon la revendication 1, **caractérisé en ce que** la structure réfléchissante (28) de la couche réfléchissante (26) est configurée en forme de dents de scie.

7. Arrangement de détection optique (3) selon la revendication 1 ou 6, **caractérisé en ce que** le dispositif de réception (12), en vue de former les éléments d'injection par couplage (20), possède des éléments de lentille (29a, 29b, 29c, 29d) correspondant aux directions de balayage (A1, A2, A3, A4), lesquels sont conçus pour capturer les parties (19) des rayons lumineux (18) réfléchies depuis la zone (4, 6) le long des directions de balayage (A1, A2, A3, A4) respectives et les injecter par couplage dans le deuxième dispositif de guidage de lumière (21).

8. Pièce rapportée (5, 7) pour un véhicule automobile (1), possédant au moins un arrangement de détection optique (3) selon l'une des revendications précédentes, les dispositifs de guidage de lumière (15, 21) de l'au moins un arrangement de détection optique (3) étant disposés au niveau d'un côté de la pièce rapportée (5, 7) à l'opposé de la zone (4, 6) et étant conçus pour guider la lumière (14, 19) le long de la surface (16) du côté de la pièce rapportée (5, 7).

9. Pièce rapportée (5, 7) selon la revendication 8, **caractérisée en ce que** la pièce rapportée (5, 7) est réalisée sous la forme d'un pare-chocs (5) ou d'un composant de l'habitacle (7) du véhicule automobile (1).

10. Véhicule automobile (1) comprenant au moins une pièce rapportée (5, 7) selon la revendication 8 ou 9.
